# EUROPÄISCHE PATENTANMELDUNG

(11) **EP 4 810 906 A1**
(43) Veröffentlichungstag der Anmeldung: **23.09.2026**
(21) Anmeldenummer: 26161964.7
(22) Anmeldetag: 03.03.2026
(51) Int. Cl.: G01C 15/00

(54) **ROTATIONSLASER**

(30) Priorität: 20.03.2025 DE 102025110725
(71) Anmelder: Robert Bosch GmbH, 70442 Stuttgart (DE)
(72) Erfinder: Zibold, Tobias, 70567 Stuttgart (DE); Roehm, Tobias, 72218 Wildberg-Sulz (DE); Hahl, Markus, 70825 Korntal-Muenchingen (DE); Carabelli, Ben William, 70771 Leinfelden-Echterdingen (DE); Lam, Keith, RG2 6FD, Bracknell (GB)

(57) **Zusammenfassung**

Bei einem Rotationslaser mit einem Gehäuse, in dem eine Lasereinheit angeordnet ist, und mit einer Nivelliereinheit mit mindestens einem Neigungssensor (184) zur Ermittlung einer Ausrichtung der Lasereinheit gegenüber einer Referenzfläche, weist der mindestens eine Neigungssensor ein im Gehäuse des Rotationslasers angeordnetes Neigungssensor-Modulgehäuse (210) auf, welches an zumindest einer Seitenfläche (301, 302) mindestens eine plane Auflagefläche (320, 360) zur plangenauen Ausrichtung des Neigungssensor-Modulgehäuses (210) im Gehäuse aufweist.

## Beschreibung

### Stand der Technik

Die vorliegende Erfindung betrifft einen Rotationslaser mit einem Gehäuse, in dem eine Lasereinheit angeordnet ist, und mit einer Nivelliereinheit mit mindestens einem Neigungssensor zur Ermittlung einer Ausrichtung der Lasereinheit gegenüber einer Referenzfläche.

Aus dem Stand der Technik ist ein Rotationslaser mit einer derartigen Nivelliereinheit bekannt. Die Lasereinheit und die Nivelliereinheit sind in einem Gehäuse des Rotationslasers angeordnet. Die Nivelliereinheit weist mindestens einen Neigungssensor zur Ermittlung einer jeweiligen Ausrichtung der Lasereinheit gegenüber einer Referenzfläche auf.

### Offenbarung der Erfindung

Die Erfindung betrifft einen Rotationslaser mit einem Gehäuse, in dem eine Lasereinheit angeordnet ist, und mit einer Nivelliereinheit mit mindestens einem Neigungssensor zur Ermittlung einer Ausrichtung der Lasereinheit gegenüber einer Referenzfläche. Der mindestens eine Neigungssensor weist ein im Gehäuse des Rotationslasers angeordnetes Neigungssensor-Modulgehäuse auf, welches an zumindest einer Seitenfläche mindestens eine plane Auflagefläche zur plangenauen Ausrichtung des Neigungssensor-Modulgehäuses im Gehäuse aufweist.

Die Erfindung ermöglicht somit die Bereitstellung eines Rotationslasers, bei dem durch die mindestens eine Auflagefläche eine exakte Ausrichtung des Neigungssensors im Gehäuse für eine präzise Messung einer Neigung der Lasereinheit ermöglicht werden kann.

Bevorzugt weist das Gehäuse eine Grundplatte mit mindestens einem planen Auflagebereich auf, wobei der mindestens eine plane Auflagebereich der mindestens einen planen Auflagefläche zugeordnet ist.

Somit kann eine einfache und präzise Anordnung des mindestens einen Neigungssensors auf der Grundplatte im Gehäuse ermöglicht werden.

Vorzugsweise ist die mindestens eine plane Auflagefläche in zumindest zwei voneinander beabstandete Teilflächen aufgeteilt.

Somit kann leicht und unkompliziert eine baumraumkomprimierte Anordnung der mindestens einen planen Auflagefläche ermöglicht werden.

Die zumindest zwei voneinander beabstandeten Teilflächen sind bevorzugt in einer gemeinsamen Ebene angeordnet, wobei die Ebene parallel zur zugeordneten Seitenfläche des Neigungssensor-Modulgehäuses angeordnet ist.

Somit kann die mindestens eine plane Auflagefläche auf einfache Art und Weise bereitgestellt werden.

Gemäß einer Ausführungsform weist mindestens eine plane Auflagefläche drei Teilflächen auf, die in einem Dreieck angeordnet sind.

Somit kann einfach und unkompliziert die Bereitstellung einer alternativen planen Auflagefläche ermöglicht werden.

Bevorzugt weist das Neigungssensor-Modulgehäuse an einer ersten Seitenfläche die mindestens eine Auflagefläche auf, wobei das Neigungssensor-Modulgehäuse mittels der mindestens einen Auflagefläche an der ersten Seitenfläche für eine erste Ausrichtung auf der Grundplatte anordenbar ist.

Somit kann leicht und zuverlässig eine erste Anordnung des Neigungssensors ermöglicht werden.

Vorzugsweise weist das Neigungssensor-Modulgehäuse an einer zweiten Seitenfläche die mindestens eine Auflagefläche auf, wobei das Neigungssensor-Modulgehäuse mittels der mindestens einen Auflagefläche an der zweiten Seitenfläche für eine zweite Ausrichtung auf der Grundplatte anordenbar ist.

Somit kann auf einfache Art und Weise eine alternative Anordnung des Neigungssensors ermöglicht werden.

Die erste Seitenfläche ist bevorzugt senkrecht zur zweiten Seitenfläche angeordnet.

Somit kann leicht und unkompliziert eine Ausrichtung des Neigungssensor-Modulgehäuses in eine erste Richtung und einer senkrecht zur ersten Richtung angeordneten, zweiten Richtung auf der Grundplatte ermöglicht werden.

Vorzugsweise weist die Grundplatte einen ersten Abschnitt zur Anordnung des Neigungssensor-Modulgehäuses in der ersten Ausrichtung auf und einen senkrecht zum ersten Abschnitt ausgerichteten zweiten Abschnitt zur Anordnung des Neigungssensor-Modulgehäuses in der zweiten Ausrichtung.

Somit können die erste und zweite Ausrichtung sicher und zuverlässig ermöglicht werden.

Bevorzugt ist in einer Innenaufnahme des Neigungssensor-Modulgehäuses eine Röhrenlibelle angeordnet, wobei die Röhrenlibelle in der Innenaufnahme des Neigungssensor-Modulgehäuses durch eine Klebeverbindung fixiert ist.

Somit kann eine stabile und robuste Anordnung der Röhrenlibelle im Neigungssensor-Modulgehäuse ermöglicht werden.

Vorzugsweise ist ein Klebemittel zur Ausbildung der Klebeverbindung durch eine Ausnehmung von außerhalb des Neigungssensor-Modulgehäuses in die Innenaufnahme einbringbar.

Somit kann auf einfache Art und Weise ein Einbringen des Klebemittels ermöglicht werden.

Bevorzugt ist die Ausnehmung an einer Seitenfläche des Neigungssensor-Modulgehäuses angeordnet, die senkrecht zur mindestens einen Auflagefläche angeordnet ist.

Somit kann einfach und unkomplizierte eine geeignete Anordnung der Ausnehmung bereitgestellt werden.

Darüber hinaus betrifft die vorliegende Erfindung ein Verfahren zur Herstellung eines Neigungssensors einer Nivelliereinheit für einen oben beschriebenen Rotationslaser, welches folgende Schritte aufweist:
- Anordnen der Röhrenlibelle innerhalb des Neigungssensor-Modulgehäuses,
- Vorspannen der Röhrenlibelle mittels eines federnden Elements,
- Ausgleichen eines Messfehlers durch ein Verschieben der Röhrenlibelle entlang ihrer Längserstreckung durch mindestens eine am Neigungssensor-Modulgehäuse angeordnete seitliche Ausnehmung, und
- Einbringen von Klebemittel durch eine Ausnehmung zur Fixierung der Röhrenlibelle.

Die vorliegende Erfindung ermöglicht somit die Bereitstellung eines Verfahrens zur Herstellung eines Neigungssensors, bei dem durch die Klebeverbindung eine einfache und exakte Anordnung der Röhrenlibelle ermöglicht werden kann.

Vorzugsweise wird nach dem Vorfixieren der Röhrenlibelle das Neigungssensor-Modulgehäuse verschlossen.

Somit kann sicher und zuverlässig ein ungewolltes Eindringen von Partikeln, z.B. Staubpartikel, verhindert werden.

Bevorzugt erfolgt nach einem Einbringen des Klebemittels ein Aushärten des Klebemittels mittels UV-Licht, wobei das UV-Licht durch einen seitlichen UV-Licht-Einbringbereich an einer der dritten Seitenfläche gegenüberliegenden, vierten Seitenfläche des Neigungssensor-Modulgehäuses oder durch einen auf einer Oberseite des Neigungssensor-Modulgehäuses angeordneten UV-Licht-Einbringbereich in das Neigungssensor-Modulgehäuse eingestrahlt wird.

Somit kann das Klebemittel schnell und einfach ausgehärtet werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht eines erfindungsgemäßen Rotationslasers mit einer Lasereinheit,
- Fig. 2: eine perspektivische Ansicht eines Neigungssensors der Nivelliereinheit von Fig. 1,
- Fig. 3: eine perspektivische Ansicht eines Teilschnitts durch den Neigungssensor von Fig. 2 ohne die Abschirmung von Fig. 2, von einer Unterseite aus gesehen,
- Fig. 4: eine perspektivische Ansicht eines Teilschnitts durch den Neigungssensor von Fig. 3,
- Fig. 5: eine perspektivische Ansicht des Neigungssensors von Fig. 2 bis Fig. 4 von einer Rückseite aus gesehen,
- Fig. 6: eine perspektivische Ansicht des Neigungssensors von Fig. 2 bis Fig. 5 von einer Vorderseite aus gesehen,
- Fig. 7: eine schematische Ansicht einer ersten Anordnung von zwei Neigungssensoren von Fig. 2 bis Fig. 6,
- Fig. 8: eine schematische Ansicht einer zweiten Anordnung von zwei Neigungssensoren von Fig. 2 bis Fig. 6,
- Fig. 9: eine perspektivische Ansicht einer der Lasereinheit von Fig. 1 zugeordneten Grundplatte,
- Fig. 10: eine Draufsicht auf eine Unterseite des Neigungssensors von Fig. 2 bis Fig. 6,
- Fig. 11: eine Schnittansicht durch den Neigungssensor von Fig. 2 bis Fig. 6,
- Fig. 12: eine Explosionsansicht von einem dem Neigungssensor von Fig. 2 bis Fig. 6 und Fig. 11 zugeordneten Licht-Emitter, einer Röhrenlibelle, einem Lichtleiter und zwei Fotodioden,
- Fig. 13: eine perspektivische Draufsicht auf den Lichtleiter des Neigungssensors von Fig. 2 bis Fig. 6, Fig. 11 und Fig. 12,
- Fig. 14: eine schematische Ansicht des Neigungssensors von Fig. 2 bis Fig. 6, Fig. 11 bis Fig. 13 bei einer Messung in einem ersten Messbereich,
- Fig. 15: eine schematische Schnittansicht des Neigungssensors von Fig. 14,
- Fig. 16: eine schematische Schnittansicht des Neigungssensors von Fig. 14 bei einer Messung in einem zweiten Messbereich,
- Fig. 17: eine Schnittansicht des Neigungssensors von Fig. 2 bis Fig. 6, Fig. 11 bis Fig. 13,
- Fig. 18: eine schematische Ansicht einer dem Neigungssensor von Fig. 2 bis Fig. 6. Fig. 11 bis Fig. 13 zugeordneten Steuerschaltung,
- Fig. 19: ein Diagramm mit den beiden Fotodioden des Neigungssensors von Fig. 2 bis Fig. 6, Fig. 11 bis Fig. 13 zugeordneten Fotoströmen in Abhängigkeit von einer Verschattung von einer der Röhrenlibelle zugeordneten Luftblase, und
- Fig. 20: ein Diagramm mit dem der Steuervorrichtung von Fig. 18 zugeordneten Summenstrom, Differenzstrom und der daraus ermittelten Neigung.

### Beschreibung der Ausführungsbeispiele

In den Figuren werden Elemente mit gleicher oder vergleichbarer Funktion mit identischen Bezugszeichen versehen und nur einmal genauer beschrieben.

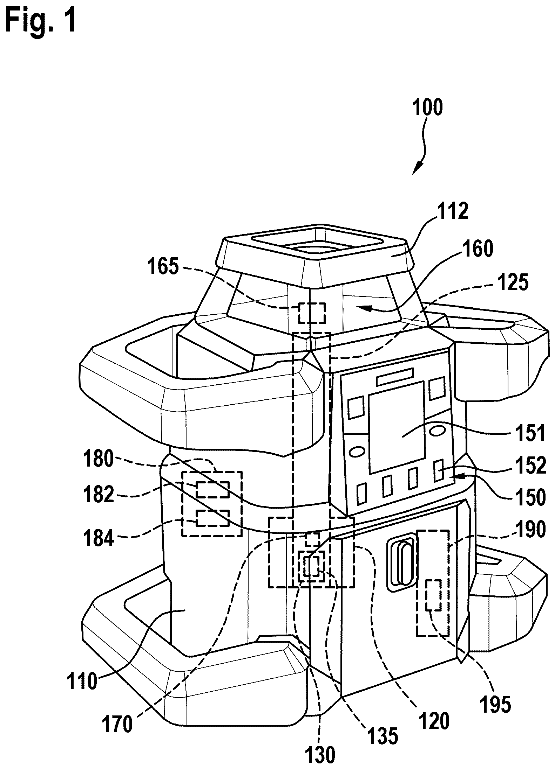

Fig. 1 zeigt einen beispielhaften Rotationslaser 100 mit einem Gehäuse 110, in dem eine Lasereinheit 130 mit einer Laserdiode 135 zur Erzeugung eines Laserstrahls angeordnet ist. Unter einem "Rotationslaser" kann im Kontext der vorliegenden Erfindung auch ein Baulaser oder ein Nivellierlaser verstanden werden. Des Weiteren ist in dem Gehäuse 110 beispielhaft eine Antriebseinheit 120 zum rotierenden Antrieb einer Antriebswelle 125 angeordnet.

Die Lasereinheit 130 ist illustrativ derart an der Antriebswelle 125 angeordnet, dass durch eine Rotation der Antriebswelle 125 der von der Lasereinheit 130 erzeugte Laserstrahl in einer zugeordneten Ebene rotiert. Hierzu ist der Antriebswelle 125 vorzugsweise ein Rotationskopf 160 mit einem Strahlenumleiter 165 zugeordnet. Der Strahlenumleiter 165 ist bevorzugt dazu ausgebildet, den Laserstrahl umzulenken, wodurch der Laserstrahl die zugeordnete Ebene projiziert. Alternativ ist der Strahlenumleiter 165 als Strahlteiler ausgebildet, wodurch zusätzlich zur projizierten Ebene ein zur Laserebene senkrecht stehender Laserstrahl entlang einer zugeordneten Laserachse emittiert wird. Je nach Bauart des Rotationslasers 100 kann die projizierte Ebene horizontal, vertikal oder z.B. mit einem definierten Neigungswinkel zur Erdoberfläche verlaufen. Vorzugsweise ist die Antriebseinheit 120 als Elektromotor ausgebildet.

Darüber hinaus ist in dem Gehäuse 110 bevorzugt eine Elektronikeinheit 190 mit einer Regelungs- und Überwachungsvorrichtung 195 angeordnet. Die Regelungs- und Überwachungsvorrichtung 195 ist vorzugsweise zur Regelung einer Laserleistung der Lasereinheit 130 in Abhängigkeit von einer Betriebsart ausgebildet. Hierbei wird eine Rotationsgeschwindigkeit der Antriebswelle 125 der Antriebseinheit 120 gesteuert oder geregelt. Hierzu ist der Antriebswelle 125 bevorzugt eine Ermittlungseinheit 170 zugeordnet.

Gemäß einer Ausführungsform ist dem Gehäuse 110 ein dem Rotationskopf 160 zugeordneter Schutzkäfig 112 zum Schutz vor einem Anschlagen des Rotationskopfs 160 zugeordnet.

Der Elektronikeinheit 190 ist bevorzugt eine Bedieneinheit 150 mit einem Display 151 und einer Eingabeeinheit 152 zugeordnet. Die Bedieneinheit 150 ist dabei bevorzugt steuer- oder regeltechnisch mit der Elektronikeinheit 190, insbesondere mit der Regelungs- und Überwachungsvorrichtung 195, verbunden. Die Eingabeeinheit 152 umfasst vorzugsweise zumindest ein Tastenfeld. In einer minimierten Ausgestaltung weist die Eingabeeinheit 152 lediglich einen An-/Aus-Schalter, insbesondere einen An-/Aus-Taster, auf. Alternativ weist die Eingabeeinheit 152 einen Drehregler, einen Touchscreen, einen Schieberegler, eine Fernbedienung oder dergleichen auf. Über die Eingabeeinheit 152 ist durch einen Nutzer z.B. eine Rotationsgeschwindigkeit für die Antriebswelle 125 eingebbar. Alternativ ist die Rotationsgeschwindigkeit der Lasereinheit 130 in einer Betriebsart automatisch regelbar.

Vorzugsweise weist der Rotationslaser 100 eine Nivelliereinheit 180 auf. Die Nivelliereinheit 180 weist bevorzugt zumindest einen Neigungssensor 184 auf, der dazu ausgebildet ist, eine Neigung des Rotationskopfs 160, insbesondere des Strahlenumleiters 165, und/oder der Lasereinheit 130 zu einer vorgegebenen, bevorzugt horizontalen Richtung bzw. zu einem Lot zu bestimmen. Darüber hinaus weist die Nivelliereinheit 180 vorzugsweise mindestens einen Neigungseinstellmotor 182 auf, der dazu ausgebildet ist, den Rotationskopf 160, insbesondere den Strahlenumleiter 165, und/oder die Lasereinheit 130, in Abhängigkeit von einer mittels des zumindest einen Neigungssensors 184 bestimmten Lage, vorzugsweise einer Neigung der Lasereinheit 130 und/oder des Rotationskopfs 160, bevorzugt zum Lot auszurichten.

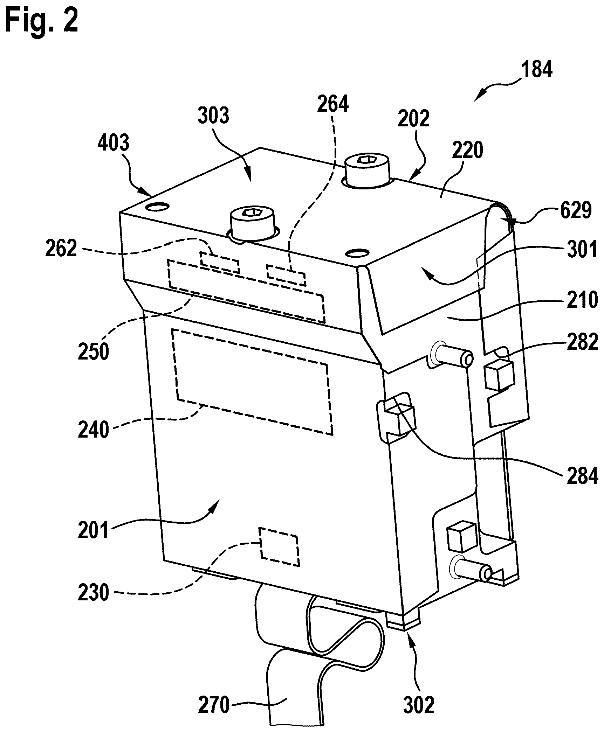

Fig. 2 zeigt einen der Nivelliereinheit 180 von Fig. 1 zugeordneten, beispielhaften Neigungssensor 184. Der Neigungssensor 184 weist ein im Gehäuse 110 des Rotationslasers 100 von Fig. 1 angeordnetes Neigungssensor-Modulgehäuse 210 auf. Das Neigungssensor-Modulgehäuse 210 weist vorzugsweise einen zumindest annähernd quaderförmigen Grundkörper mit einer ersten, illustrativ rechten Seitenfläche 301, einer senkrecht zur ersten Seitenfläche 301 angeordneten zweiten, illustrativ unteren Seitenfläche 302, sowie einer dritten, illustrativ hinteren Seitenfläche 202 und einer gegenüberliegenden vierten Seitenfläche 201 auf. Des Weiteren ist eine fünfte, illustrativ linke Seitenfläche 403 gegenüberliegend zur ersten Seitenfläche 301 vorgesehen sowie eine der zweiten Seitenfläche 302 gegenüberliegende Oberseite 303.

An einem Außenumfang 629 des Neigungssensor-Modulgehäuses 210 ist vorzugsweise eine Infrarot-Abschirmung 220 angeordnet. Bevorzugt ist die Infrarot-Abschirmung 220 zumindest abschnittsweise an dem Neigungssensor-Modulgehäuse 210 angeordnet. Vorzugsweise ist die die Infrarot-Abschirmung 220 mittels einer Klebeverbindung am Neigungssensor-Modulgehäuse 210 befestigt. Bevorzugt ist ein doppelseitiges Klebeband zur Ausbildung der Klebeverbindung der Infrarot-Abschirmung 220 am Neigungssensor-Modulgehäuse 210 vorgesehen. Die Infrarot-Abschirmung 220 weist eine Undurchlässigkeit für Wellenlängen im Infrarot-Frequenzband auf, sodass Wellenlängen im Infrarot-Frequenzband das Neigungssensor-Modulgehäuse 210 nicht verlassen können. Beispielsweise kann die Infrarot-Abschirmung 220 als aluminiumkaschierte Klebefolie ausgebildet sein. Alternativ ist die Infrarot-Abschirmung 220 als Stanzbiegeteil ausgebildet. Hierbei umgreift die Infrarot-Abschirmung 220 das Neigungssensor-Modulgehäuse 210 bevorzugt abschnittsweise. Illustrativ ist die Infrarot-Abschirmung 220 um das Neigungssensor-Modulgehäuse 210 gebogen. Vorzugsweise ist die Infrarot-Abschirmung 220 zumindest an der dritten und/oder vierten Seitenfläche 202, 201 angeordnet.

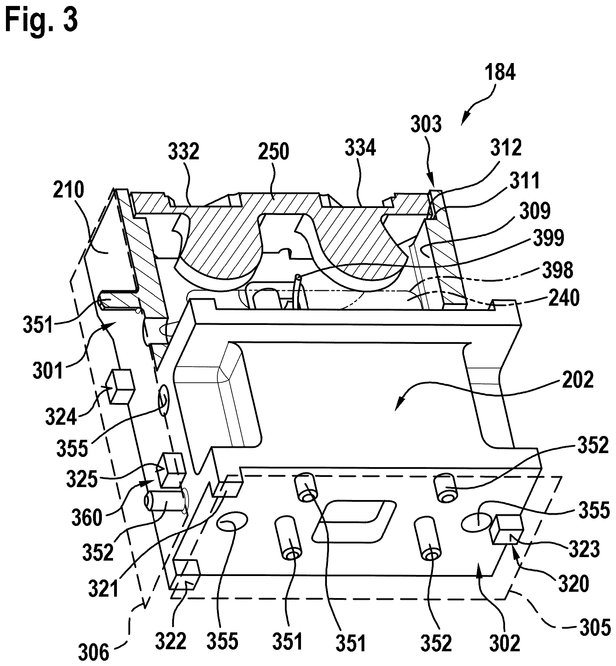

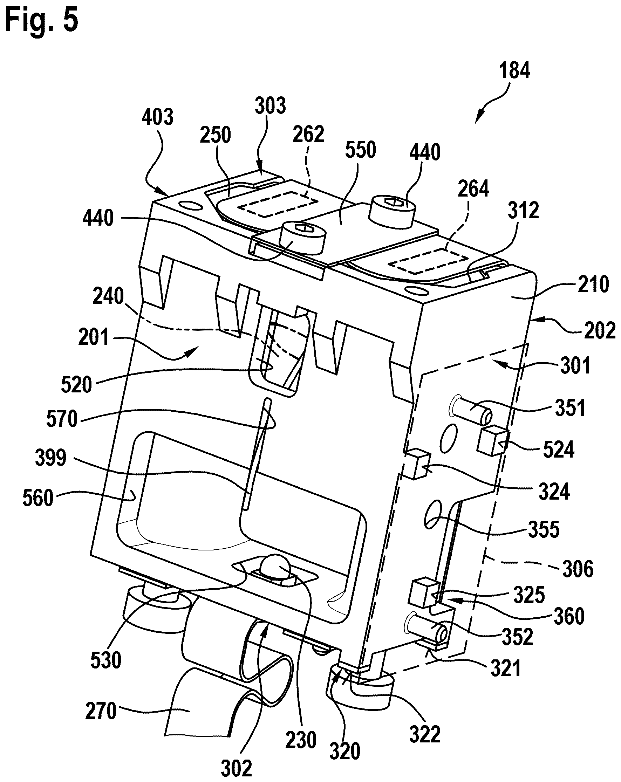

Beispielhaft weist die Infrarot-Abschirmung 220 zwei Ausnehmungen 282, 284 auf. Die Ausnehmungen 282, 284 sind vorzugsweise dazu ausgebildet, ein Durchgreifen von dem Neigungssensor-Modulgehäuse 210 zugeordneten Teilen zu ermöglichen. Illustrativ durchgreifen Teilflächen (324 in Fig. 3 und 524 in Fig. 5) des Neigungssensor-Modulgehäuses 210 die Ausnehmungen 282, 284 der Infrarot-Abschirmung 220. Insbesondere sind die Ausnehmungen 282, 284 bevorzugt zumindest einer dem Neigungssensor-Modulgehäuse 210 zugeordneten, mindestens einen planen Auflagefläche (320, 360 in Fig. 3) zugeordnet.

In dem Neigungssensor-Modulgehäuse 210 sind zur Ermittlung einer Ausrichtung der Lasereinheit 130 von Fig. 1 vorzugsweise eine Röhrenlibelle 240 und ein Infrarot-Emitter 230 angeordnet. Vorzugsweise ist in dem Neigungssensor-Modulgehäuse 210 ein von der Röhrenlibelle 240 beabstandeter Lichtleiter 250 angeordnet. Darüber hinaus weist der Neigungssensor 184 in seinem Neigungssensor-Modulgehäuse 210 bevorzugt mindestens eine Fotodiode 262, 264 auf. Illustrativ sind zwei Fotodioden 262, 264 vorgesehen.

Der Lichtleiter 250 weist vorzugsweise Glas oder transparenten Kunststoff auf. Gemäß einer Ausführungsform ist der Lichtleiter 250 aus Glas oder transparentem Kunststoff gefertigt. Vorzugsweise ist der Lichtleiter 250 am Neigungssensor-Modulgehäuse 210 fixiert. Hierbei ist der Lichtleiter 250 z.B. mittels einer Schraubverbindung am Neigungssensor-Modulgehäuse 210 fixiert. Alternativ oder optional ist der Lichtleiter 250 z.B. mittels einer Klebeverbindung am Neigungssensor-Modulgehäuse 210 fixiert. Gemäß einer Ausführungsform ist der Lichtleiter 250 einstückig mit dem Neigungssensor-Modulgehäuse 210 ausgebildet.

Des Weiteren weist der Neigungssensor 184 vorzugsweise eine flexible Leiterplatte 270 auf. Bevorzugt sind der Infrarot-Emitter 230 und die mindestens eine Fotodiode 262, 264 auf der flexiblen Leiterplatte 270 angeordnet. Die flexible Leiterplatte 270 ist vorzugsweise am Außenumfang 629 des Neigungssensor-Modulgehäuses 210 angeordnet. Hierbei umgreift die flexible Leiterplatte 270 das Neigungssensor-Modulgehäuse 210 bevorzugt zumindest abschnittsweise. Die flexible Leiterplatte 270 ist dabei z.B. abschnittsweise zwischen dem Neigungssensor-Modulgehäuse 210 und der Infrarot-Abschirmung 220 angeordnet.

Fig. 3 zeigt den Neigungssensor 184 mit dem Neigungssensor-Modulgehäuse 210 von Fig. 2 ohne die Infrarot-Abschirmung 220 von Fig. 2. Das Neigungssensor-Modulgehäuse 210 weist vorzugsweise an zumindest einer Seitenfläche 301, 302 mindestens eine plane Auflagefläche 320, 360 zur plangenauen Ausrichtung des Neigungssensor-Modulgehäuses 210 im Gehäuse 110 auf. Hierdurch kann eine präzise Anordnung des Neigungssensors 184 zur Lasereinheit 130 ermöglicht werden, wodurch eine exakte und präzise Messung einer Neigung der Lasereinheit ermöglicht werden kann. Unter einer "planen Auflagefläche" wird im Kontext der Erfindung eine ebene Fläche verstanden, die vorzugsweise mittels eines Präzisionswerkzeugs, z.B. einem Planfräser oder einem Planschleifmittel, bearbeitet wurde.

Die mindestens eine plane Auflagefläche 320, 360 ist bevorzugt in zumindest zwei voneinander beabstandete Teilflächen 321, 322, 323, 324, 325, (524 in Fig. 5) aufgeteilt. Hierbei sind vorzugsweise die zumindest zwei voneinander beabstandeten Teilflächen 321, 322, 323, 324, 325, (524 in Fig. 5) in zumindest einer gemeinsamen Ebene 305, 306 angeordnet. Die Ebene 305, 306 ist illustrativ parallel zur zugeordneten Seitenfläche 301, 302 des Neigungssensor-Modulgehäuses 210 angeordnet. Insbesondere ist die Ebene 305 senkrecht zur Ebene 306 angeordnet.

Illustrativ sind die Teilflächen 321, 322, 323 der Ebene 305 zugeordnet, die zumindest im Wesentlichen parallel zu der zweiten, illustrativ unteren Seitenfläche 302 des Neigungssensor-Modulgehäuses 210 angeordnet ist. Die zweite Seitenfläche 302 ist dabei beispielhaft parallel zum Lichtleiter 250 angeordnet. Illustrativ sind die Teilflächen 324, 325 der Ebene 306 zugeordnet, die zumindest im Wesentlichen parallel zu der ersten, illustrativ linken Seitenfläche 301 des Neigungssensor-Modulgehäuses 210 angeordnet ist. Die zweite Seitenfläche 302 ist dabei vorzugsweise zumindest im Wesentlichen senkrecht zur ersten Seitenfläche 301 angeordnet.

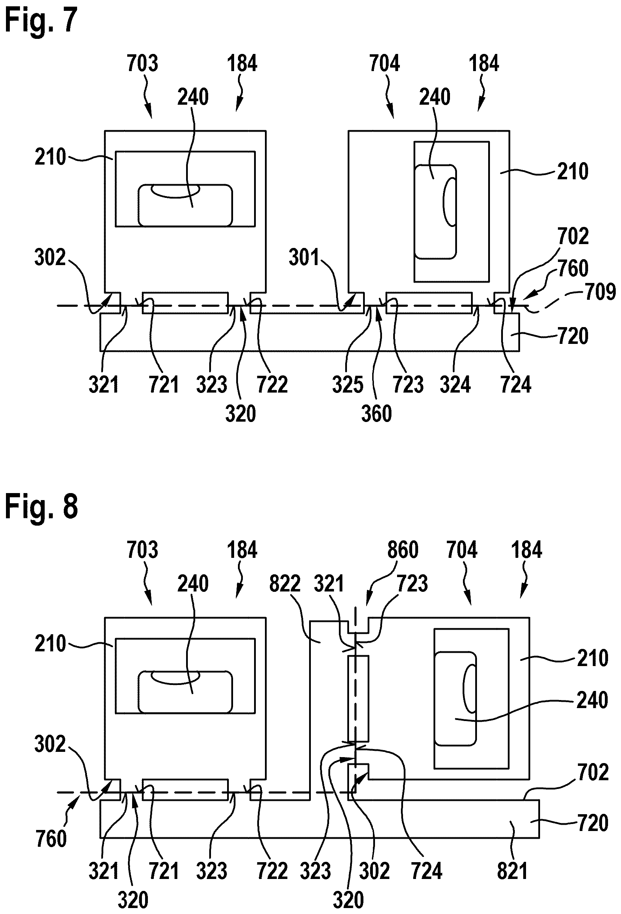

Bevorzugt ist der Seitenfläche 301 und/oder der Seitenfläche 302 zumindest ein Zentrierstift 351, 352 zugeordnet. Illustrativ sind jeweils zwei Zentrierstifte 351 und Zentrierstifte 352 der Seitenfläche 302 zugeordnet und der Seitenfläche 301 ist jeweils ein Zentrierstift 351 und 352 zugeordnet. Die Zentrierstifte 351, 352 sind dazu ausgebildet, den Neigungssensor 184 eindeutig und wiederholbar auf einer Grundplatte (720 in Fig. 7 bis Fig. 9) zu positionieren. Darüber hinaus weist die Seitenfläche 301 und/oder die Seitenfläche 302 bevorzugt zumindest eine Ausnehmung 355 zur Fixierung im Gehäuse 110 von Fig. 1 auf.

Vorzugsweise ist in einer Innenaufnahme 309 des Neigungssensor-Modulgehäuses 210 die Röhrenlibelle 240 angeordnet. Zur Positionierung der Röhrenlibelle 240 in der Innenaufnahme 309 des Neigungssensor-Modulgehäuses 210 ist illustrativ ein federndes Element 399 vorgesehen. Das federnde Element 399 beaufschlagt die Röhrenlibelle 240 dabei vorzugsweise an ihrem Außenumfang 398 in eine vorgegebene Position. Beispielhaft ist das federnde Element 399 als Drahtfeder oder Blattfeder ausgebildet.

Bevorzugt ist die Röhrenlibelle 240 in der Innenaufnahme 309 des Neigungssensor-Modulgehäuses 210 durch eine Klebeverbindung fixiert. Vorzugsweise ist ein die Klebeverbindung ausbildendes Klebemittel mittels UV-Licht aushärtbar. Gemäß einer Ausführungsform weist das Neigungssensor-Modulgehäuse 210 an der Seitenfläche 201 oder an der Oberseite 303 einen UV-Licht-Einbringbereich 312 (520 in Fig. 5) zum Aushärten des Klebemittels, das die Röhrenlibelle 240 im Neigungssensor-Modulgehäuse 210 fixiert, auf. Hierbei wird das Klebemittel z.B. mittels einer UV-Lampe ausgehärtet.

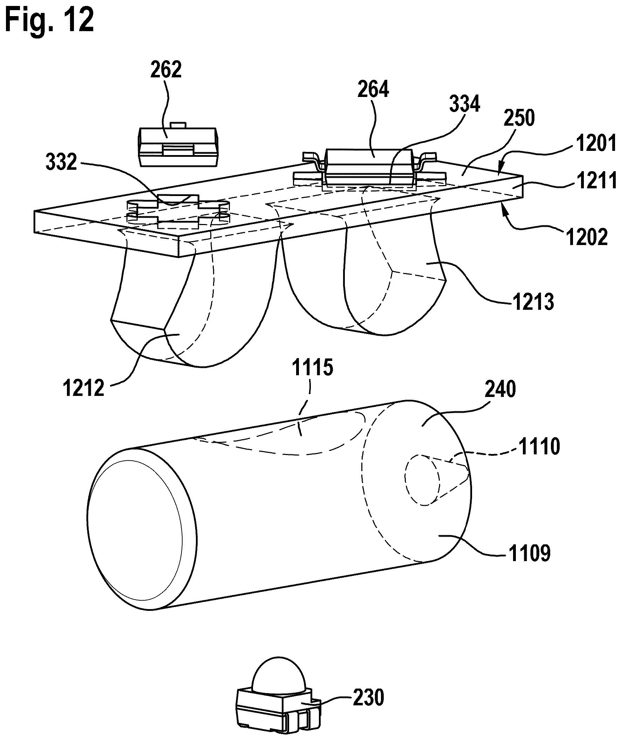

Darüber hinaus ist der Lichtleiter 250 illustrativ in einer der Innenaufnahme 309 zugeordneten und der Oberseite 303 des Neigungssensor-Modulgehäuses 210 zugewandten Aufnahme 311 aufgenommen. Vorzugsweise weist der Lichtleiter 250 an seiner von der Röhrenlibelle 240 abgewandten Seite (1201 in Fig. 12), bzw. der Oberseite 303 zugewandten Seite, mindestens eine Aufnahme 332, 334 zur Aufnahme von mindestens einer Fotodiode 262, 264 auf. Illustrativ ist die Aufnahme 332 zur Aufnahme der Fotodiode 262 und die Aufnahme 334 zur Aufnahme der Fotodiode 264 vorgesehen. Alternativ können auch mehrere Fotodioden 262, 264 in einer gemeinsamen Aufnahme 332, 334 anordenbar sein.

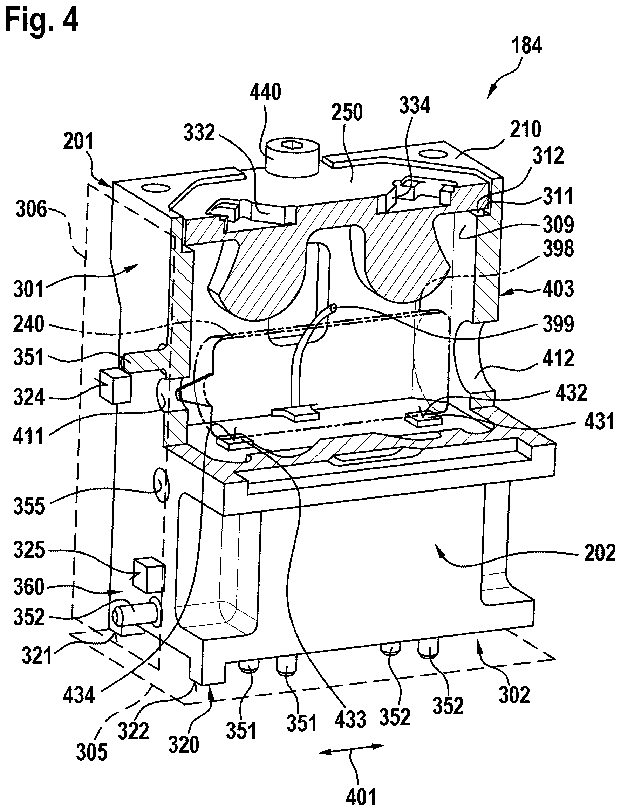

Fig. 4 zeigt den Neigungssensor 184 von Fig. 1 bis Fig. 3. Dabei verdeutlicht Fig. 4 die Anordnung des Lichtleiters 250 in der Aufnahme 311 des Neigungssensor-Modulgehäuses 210. Illustrativ ist der Lichtleiter 250 mittels zumindest einer Schraube 440 am Neigungssensor-Modulgehäuse 210 fixiert. Alternativ ist der Lichtleiter 250 mittels einer Klebeverbindung am Neigungssensor-Modulgehäuse 210 fixiert. Jedoch kann der Lichtleiter 250 auch lediglich durch ein Anordnen in der Aufnahme 311 des Neigungssensor-Modulgehäuses 210 im Neigungssensor-Modulgehäuse 210 fixiert sein, da die Aufnahme 311 sich zur Röhrenlibelle 240 hin, bzw. illustrativ nach unten, in die Innenaufnahme 309 des Neigungssensor-Modulgehäuses 210 verjüngt.

Des Weiteren zeigt Fig. 4 die Anordnung der Röhrenlibelle 240 in der Innenaufnahme 309 des Neigungssensor-Modulgehäuses 210. Die Röhrenlibelle 240 ist bevorzugt auf zumindest einem, illustrativ auf zwei Lagerungselementen 431, 433 in der Innenaufnahme 309 gelagert. Hierbei weist das zumindest eine Lagerungselement 431, 433 bevorzugt mindestens eine plane Auflagefläche 432, 434 auf. Illustrativ weist das Lagerungselement 431 die plane Auflagefläche 432 auf und das Lagerungselement 433 die plane Auflagefläche 434. Die Röhrenlibelle 240 liegt vorzugsweise mit ihrem Außenumfang 398 auf den planen Auflageflächen 432, 434 auf. Bevorzugt sind die planen Auflageflächen 432, 434 parallel zur Auflagefläche 320 der illustrativ unteren Seitenfläche 302 angeordnet. Gemäß einer Ausführungsform sind die planen Auflageflächen 432, 434 senkrecht zur Auflagefläche 360 der illustrativ linken Seitenfläche 301 angeordnet.

Darüber hinaus weist das Neigungssensor-Modulgehäuse 210 an der illustrativ linken Seitenfläche 301 und an einer fünften Seitenfläche 403 vorzugsweise zumindest eine Ausnehmung 411, 412 zum Verschieben der Röhrenlibelle 240 entlang ihrer Längserstreckung 401 auf. Illustrativ sind zwei Ausnehmungen 411, 412 vorgesehen, wobei die Ausnehmung 411 der Seitenfläche 301 zugeordnet ist und die Ausnehmung 412 der Seitenfläche 403 zugeordnet ist. Hierbei ist die fünfte Seitenfläche 403 beispielhaft gegenüberliegend zur Seitenfläche 301 in Fig. 4 illustrativ rechts angeordnet. Die Ausnehmung 411 ist dabei der illustrativ linken Seitenfläche 301 zugeordnet und die Ausnehmung 412 ist der illustrativ rechten Seitenfläche 403 zugeordnet. Beispielhaft weist die illustrativ rechte Ausnehmung 412 einen größeren Durchmesser auf als die illustrativ linke Ausnehmung 411.

Fig. 5 zeigt den Neigungssensor 184 von Fig. 1 bis Fig. 4 und verdeutlicht die Fixierung des Lichtleiters 250 an der Oberseite 303 des Neigungssensor-Modulgehäuses 210 mittels vorzugsweise zwei Schrauben 440. Zur sicheren und zuverlässigen Fixierung ist eine optionale Beaufschlagungsplatte 550 vorgesehen, die an der Oberseite 303 den Lichtleiter 250 mittels der Schrauben 440 fixiert. Alternativ oder optional ist der Lichtleiter 250 mittels einer Klebeverbindung an der Oberseite 303 des Neigungssensor-Modulgehäuses 210 fixiert. Bevorzugt ist ein Klebemittel zur Ausbildung der Klebeverbindung zwischen dem Lichtleiter 250 und der Oberseite 303 des Neigungssensor-Modulgehäuses 210 ein UV-härtendes Klebemittel.

Des Weiteren zeigt Fig. 5 die Seitenfläche 201 des Neigungssensor-Modulgehäuses 210, das vorzugsweise eine Ausnehmung 560 aufweist. Die Ausnehmung 560 ist im Bereich nahe der illustrativ unteren Seitenfläche 302 ausgebildet. Die Seitenfläche 302 weist bevorzugt eine Ausnehmung 530 auf, in der der Infrarot-Emitter 230 angeordnet ist. Darüber hinaus weist die Seitenfläche 201 eine illustrativ schlitzförmige Ausnehmung 570 auf, die dazu ausgebildet ist, das flexible Element 399 abschnittsweise in der Innenaufnahme 309 in Fig. 3 und Fig. 4 des Neigungssensor-Modulgehäuses 210 anzuordnen.

Gemäß einer Ausführungsform weist das Neigungssensor-Modulgehäuse 210 an der Seitenfläche 201 einen UV-Licht-Einbringbereich 520 zum Aushärten eines Klebemittels, das die Röhrenlibelle 240 im Neigungssensor-Modulgehäuse 210 fixiert, mittels einer UV-Lampe, auf. Der UV-Licht-Einbringbereich 520 ist an einem illustrativ oberen, dem Lichtleiter 250 zugewandten Bereich der Seitenfläche 201 angeordnet. Die Seitenfläche 201 wird im montierten Zustand des Neigungssensors 184, wie in Fig. 2 gezeigt, von der Infrarot-Abschirmung 220 von Fig. 2 verschlossen.

Fig. 5 verdeutlicht des Weiteren die der Seitenfläche 301 zugeordnete plane Auflagefläche 360. Die plane Auflagefläche 360 weist, wie oben beschrieben, Teilflächen 324, 325, 524 auf. Die Teilflächen 324, 325, 524 sind der Ebene 306 zugeordnet.

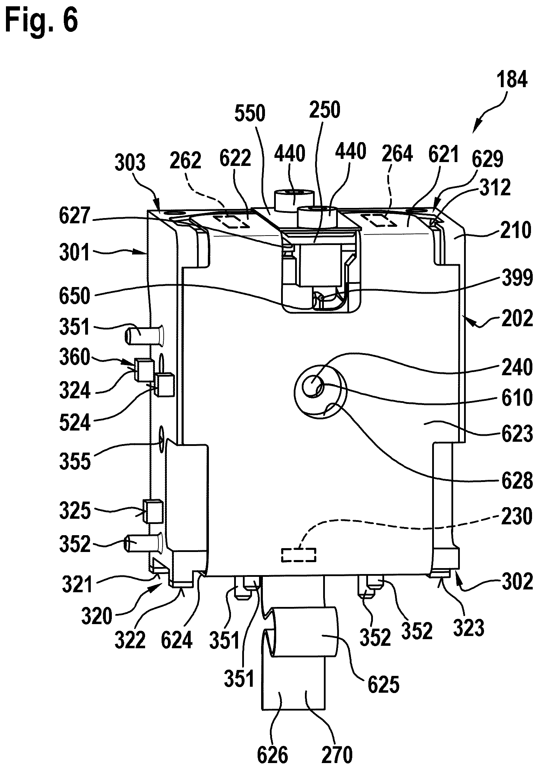

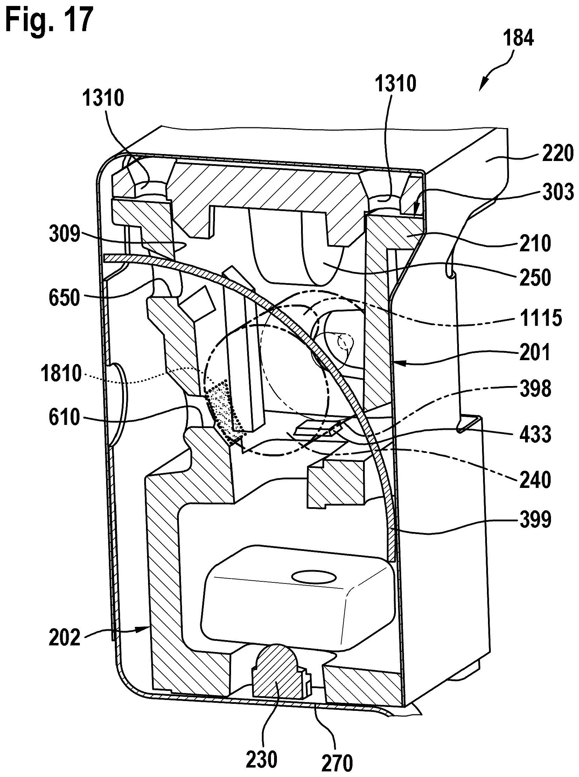

Fig. 6 zeigt den Neigungssensor 184 von Fig. 1 bis Fig. 5 von der Seitenfläche 202 aus gesehen. Zur Fixierung der Röhrenlibelle 240 in der Innenaufnahme 309 in Fig. 3 und Fig. 4 des Neigungssensor-Modulgehäuses 210 mittels einer Klebeverbindung weist das Neigungssensor-Modulgehäuse 210 bevorzugt eine Ausnehmung 610, bzw. eine Klebemittel-Einbring-Ausnehmung 610 auf, durch die von außerhalb des Neigungssensor-Modulgehäuses 210 in die Innenaufnahme 309 Klebemittel (1810 in Fig. 17) einbringbar ist. Vorzugsweise ist die Ausnehmung 610 an der Seitenfläche 202 angeordnet. Des Weiteren weist die Seitenfläche 202 beispielhaft eine Ausnehmung 650 auf, in der das federnde Element 399 angeordnet ist. Illustrativ ist die Ausnehmung 650 oberhalb der Ausnehmung 610 angeordnet.

Darüber hinaus verdeutlicht Fig. 6 die flexible Leiterplatte 270, die am Außenumfang 629 des Neigungssensor-Modulgehäuses 210 angeordnet ist und das Neigungssensor-Modulgehäuse 210 zumindest abschnittsweise umgreift. Die flexible Leiterplatte 270 weist illustrativ einen ersten Leiterplattenabschnitt 621, 622 auf, auf dem die mindestens eine Fotodiode 262, 264 angeordnet ist. Beispielhaft sind zwei erste Leiterplattenabschnitte 621, 622 ausgebildet, wobei jeder erste Leiterplattenabschnitt 621, 622 jeweils eine Fotodiode 262, 264 aufnimmt. Der illustrativ rechte erste Leiterplattenabschnitt 621 ist der Fotodiode 264 zugeordnet und der illustrativ linke erste Leiterplattenabschnitt 622 ist der Fotodiode 262 zugeordnet. Zwischen den beiden ersten Leiterplattenabschnitten 621, 622 ist vorzugsweise eine Ausnehmung 627 ausgebildet. Die Ausnehmung 627 ist dazu ausgebildet, eine vorhandene Positionierungstoleranz der beiden Fotodioden 262, 264 auf der flexiblen Leiterplatte 270 auszugleichen, sodass die Fotodioden 262, 264 präzise in den dafür vorgesehenen Ausnehmungen 332, 334 von Fig. 3 und Fig. 4 im Lichtleiter 250 platziert werden können. Illustrativ und beispielhaft ist die optionale Beaufschlagungsplatte 550 des Lichtleiters 250 in der Ausnehmung 627 angeordnet.

Des Weiteren weist die flexible Leiterplatte 270 vorzugsweise einen zweiten Leiterplattenabschnitt 624 auf, auf dem der Infrarot-Emitter 230 angeordnet ist. Der erste und zweite Leiterplattenabschnitt 621, 622, 624 sind vorzugsweise über einen Verbindungsabschnitt 623 miteinander verbunden. Der Verbindungsabschnitt 623 ist illustrativ an der Seitenfläche 202 angeordnet. Hierbei weist der Verbindungsabschnitt 623 vorzugsweise eine der Ausnehmung 610 des Neigungssensor-Modulgehäuses 210 zugeordnete Ausnehmung 628 auf.

Bevorzugt ist der zumindest eine erste Leiterplattenabschnitt 621, 622, illustrativ die zwei ersten Leiterplattenabschnitte 621, 622, an der Oberseite 303 des Neigungssensor-Modulgehäuses 210 angeordnet und fixiert. Hierbei sind die ersten Leiterplattenabschnitte 621, 622 vorzugsweise mittels einer Klebeverbindung an der Oberseite 303 fixiert. Bevorzugt sind die ersten Leiterplattenabschnitte 621, 622 an dem Lichtleiter 250 fixiert. Vorzugsweise sind die ersten Leiterplattenabschnitte 621, 622 mittels einer optisch transparenten Klebeverbindung am Lichtleiter 250 fixiert. Hierbei ist die optisch transparente Klebeverbindung zwischen der mindestens einen Fotodiode 262, 264 und dem Lichtleiter 250, insbesondere der mindestens einen Aufnahme 332, 334 von Fig. 3 und Fig. 4 des Lichtleiters 250, ausgebildet. Durch die optisch transparente Klebeverbindung kann ein zwischen dem Lichtleiter 250 und den Fotodioden 262, 264 ausgebildeter Luftspalt, eliminiert werden und somit eine entsprechende Lichteinkopplung optimiert werden. Vorzugsweise ist der zweite Leiterplattenabschnitt 624 an der illustrativ unteren Seitenfläche 302 des Neigungssensor-Modulgehäuses 210 angeordnet. Der zweite Leiterplattenabschnitt 624 weist bevorzugt den Infrarot-Emitter 230 auf. Vorzugsweise ist der zweite Leiterplattenabschnitt 624 an der illustrativ unteren Seitenfläche 302 mittels einer Klebeverbindung fixiert.

Bevorzugt ist zwischen der flexiblen Leiterplatte 270 und dem Neigungssensor-Modulgehäuse 210 zur Ausbildung der oben beschriebenen Klebeverbindung en doppelseitiges Klebeband angeordnet. Darüber hinaus weist die flexible Leiterplatte 270 einen Kontaktierungsabschnitt 626 auf. Der Kontaktierungsabschnitt 626 ist vorzugsweise über einen flexiblen Verbindungsabschnitt 625 mit dem zweiten Leiterplattenabschnitt 624 verbunden.

Es wird darauf hingewiesen, dass die Röhrenlibelle 240 bevorzugt mittels eines durch UV-Licht härtbaren Klebemittels im Neigungssensor-Modulgehäuse 210 befestigt wird, der mindestens eine erste Leiterplattenabschnitt 621, 622 bevorzugt mittels eines durch UV-Licht härtbaren Klebemittels im Lichtleiter 250 befestigt wird und die flexible Leiterplatte 270 vorzugsweise mittels doppelseitigem Klebeband im Neigungssensor-Modulgehäuse 210 fixiert wird. Alternativ kann der mindestens eine erste Leiterplattenabschnitt 621, 622 mit einem nicht UV-Licht härtbaren Klebemittel im Lichtleiter 250 befestigt sein.

Fig. 7 zeigt eine dem Gehäuse 110 von Fig. 1 zugeordnete Grundplatte 720 auf der der mindestens eine Neigungssensor 184 von Fig. 1 bis Fig. 6 anordenbar ist. Die Grundplatte 720 ist mit der Lasereinheit 130 von Fig. 1 in dem Gehäuse 110 von Fig. 1 bewegbar gelagert. Illustrativ sind zwei Neigungssensoren 184 auf der Grundplatte 720 angeordnet. Hierzu weist die Grundplatte 720 auf einer den Neigungssensoren 184 zugewandten Seite 702 vorzugsweise mindestens einen planen Auflagebereich 760 auf. Der mindestens eine plane Auflagebereich 760 ist bevorzugt der mindestens einen planen Auflagefläche 320, 360 des Neigungssensor-Modulgehäuses 210 zugeordnet.

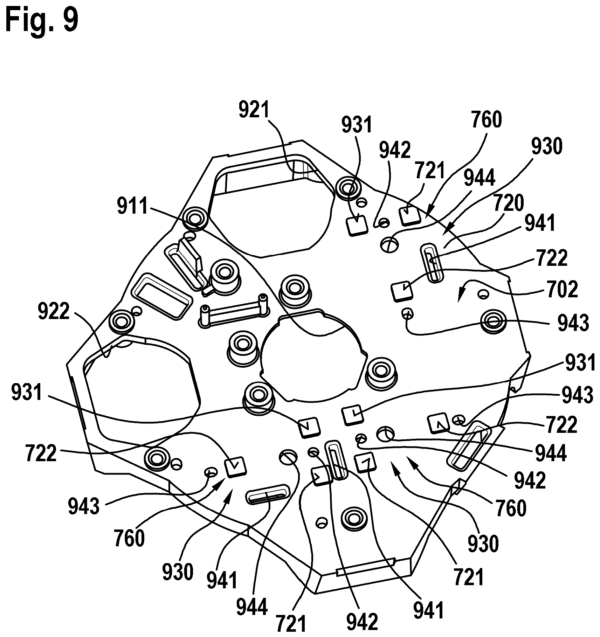

Der plane Auflagebereich 760 ist vorzugsweise in zumindest zwei voneinander beabstandete Teilbereiche 721, 722, 723, 724 aufgeteilt. Die zumindest zwei voneinander beabstandeten Teilbereiche 721, 722, 723, 724 sind dabei bevorzugt in einer gemeinsamen Ebene 709 angeordnet. Die Ebene 709 ist dabei illustrativ parallel zur Seite 702 der Grundplatte 720 angeordnet. Bevorzugt weist der plane Auflagebereich 760 drei voneinander beabstandete Teilbereiche 721, 722; (931 in Fig. 9) auf. Die drei planen Teilbereiche 721, 722; (931 in Fig. 9) eines planen Auflagebereichs 760 sind vorzugsweise analog zu den drei Teilflächen 321, 322, 323, 324, 325; 524 einer planen Auflagefläche 320, 360 in einem Dreieck angeordnet.

Der illustrativ linke Neigungssensor 184 ist mit seiner an der Seitenfläche 302 angeordneten planen Auflagefläche 320 des Neigungssensor-Modulgehäuses 210 beispielhaft für eine erste Ausrichtung 703 an dem planen Auflagebereich 760 der Grundplatte 720 angeordnet. Die erste Ausrichtung 703 ist bevorzugt eine horizontale Ausrichtung des Neigungssensors 184 auf der Grundplatte 720. Hierbei liegt die Teilfläche 321 des Neigungssensor-Modulgehäuses 210 an dem Teilbereich 721 der Grundplatte 720 an und die Teilfläche 323 des Neigungssensor-Modulgehäuses 210 liegt an dem Teilbereich 722 der Grundplatte 720 an.

Der illustrativ rechte Neigungssensor 184 ist bevorzugt mit seiner an der Seitenfläche 301 angeordneten planen Auflagefläche 360 des Neigungssensor-Modulgehäuses 210 für eine zweite Ausrichtung 704 an dem planen Auflagebereich 760 der Grundplatte 720 angeordnet. Die zweite Ausrichtung 704 ist bevorzugt eine vertikale Ausrichtung des Neigungssensors 184 auf der Grundplatte 720. Hierbei liegt die Teilfläche 325 des Neigungssensor-Modulgehäuses 210 illustrativ an dem Teilbereich 723 der Grundplatte 720 an und die Teilfläche 324 des Neigungssensor-Modulgehäuses 210 liegt illustrativ an dem Teilbereich 724 der Grundplatte 720 an.

Fig. 8 zeigt die Grundplatte 720 mit zwei Neigungssensoren 184 von Fig. 7, wobei die Grundplatte 720 illustrativ einen ersten Abschnitt 821 und einen zweiten, senkrecht zum ersten Abschnitt 821 ausgerichteten, zweiten Abschnitt 822 aufweist. Der erste Abschnitt 821 ist bevorzugt zur Anordnung des Neigungssensors 184 bzw. des Neigungssensor-Modulgehäuses 210 in der ersten Ausrichtung 703 ausgebildet und der zweite Abschnitt 822 ist zur Anordnung des Neigungssensors 184 bzw. des Neigungssensor-Modulgehäuses 210 in der zweiten Ausrichtung 704 ausgebildet.

Der illustrativ linke Neigungssensor 184 ist mit seiner an der Seitenfläche 302 angeordneten planen Auflagefläche 320 des Neigungssensor-Modulgehäuses 210 für die erste Ausrichtung 703 vorzugsweise an dem planen Auflagebereich 760 des ersten Abschnitts 821 der Grundplatte 720 angeordnet. Hierbei liegt die Teilfläche 321 des Neigungssensor-Modulgehäuses 210 illustrativ an dem Teilbereich 721 des ersten Abschnitts 821 der Grundplatte 720 an und die Teilfläche 323 des Neigungssensor-Modulgehäuses 210 liegt illustrativ an dem Teilbereich 722 des ersten Abschnitts 821 der Grundplatte 720 an.

Der illustrativ rechte Neigungssensor 184 ist bevorzugt mit seiner an der Seitenfläche 302 angeordneten planen Auflagefläche 320 des Neigungssensor-Modulgehäuses 210 für die zweite Ausrichtung 704 an einem planen Auflagebereich 860 des zweiten Abschnitts 822 der Grundplatte 720 angeordnet. Hierbei liegt die Teilfläche 321 des Neigungssensor-Modulgehäuses 210 illustrativ an dem Teilbereich 723 des zweiten Abschnitts 822 der Grundplatte 720 an und die Teilfläche 323 des Neigungssensor-Modulgehäuses 210 liegt illustrativ an dem Teilbereich 724 des zweiten Abschnitts 822 der Grundplatte 720 an.

Fig. 9 zeigt die Grundplatte 720 gemäß einer alternativen Anordnung, bei der vorzugsweise drei Neigungssensoren 184 auf der Seite 702 der Grundplatte 720 anordenbar sind. Die Grundplatte 720 weist illustrativ drei Montagestellen 930 zur Anordnung eines Neigungssensors 184 auf. Jede Montagestelle 930 weist vorzugsweise einen planen Auflagebereich 760 auf. Bevorzugt sind die drei Montagestellen 930, bzw. die drei planen Auflagebereiche 760, in einer gemeinsamen Ebene angeordnet. Alternativ weist jeder plane Auflagebereich 760 eine zugeordnete Ebene auf.

Jeder plane Auflagebereich 760 weist vorzugsweise, wie oben beschrieben, drei Teilbereiche 721, 722, 931 auf, die bevorzugt in einem Dreieck angeordnet sind. Im Schwerpunkt des Dreiecks ist vorzugsweise eine Ausnehmung 944 zum Fixieren des Neigungssensors 184 bzw. des Neigungssensor-Modulgehäuses 210 angeordnet. Bevorzugt ist das Neigungssensor-Modulgehäuse 210 mittels einer Schraubverbindung an der Grundplatte 720 fixiert. Des Weiteren sind jeder Montagestelle 930 vorzugsweise zwei Aufnahmen 942, 943 zur Aufnahme der Zentrierstifte 351, 352 des Neigungssensor-Modulgehäuses 210 von Fig. 3 zugeordnet. Darüber hinaus ist jeder Montagestelle 930 illustrativ eine schlitzförmige Ausnehmung 941 zum Durchführen der Leiterplatte 270, insbesondere des flexiblen Verbindungsabschnitts 625 von Fig. 6 und/oder des Kontaktierungsabschnitts 626 von Fig. 6 des Neigungssensors 184 von Fig. 1 bis Fig. 8, zugeordnet.

Des Weiteren weist die Grundplatte 720 bevorzugt eine Ausnehmung 911 zum abschnittsweisen Anordnen der Lasereinheit 130 von Fig. 1 auf. Hierbei ist zumindest die Antriebswelle 125 der Antriebseinheit 120 der Lasereinheit 130 von Fig. 1 abschnittsweise in der Ausnehmung 911 angeordnet. Bevorzugt ist die Ausnehmung 911 als zentrale Ausnehmung der Grundplatte 720 ausgebildet. Darüber hinaus weist die Grundplatte 720 vorzugsweise zwei Aufnahmen 921, 922 auf, die zur Aufnahme jeweils eines Neigungseinstellmotors 182 der Nivelliereinheit 180 von Fig. 1 ausgebildet sind.

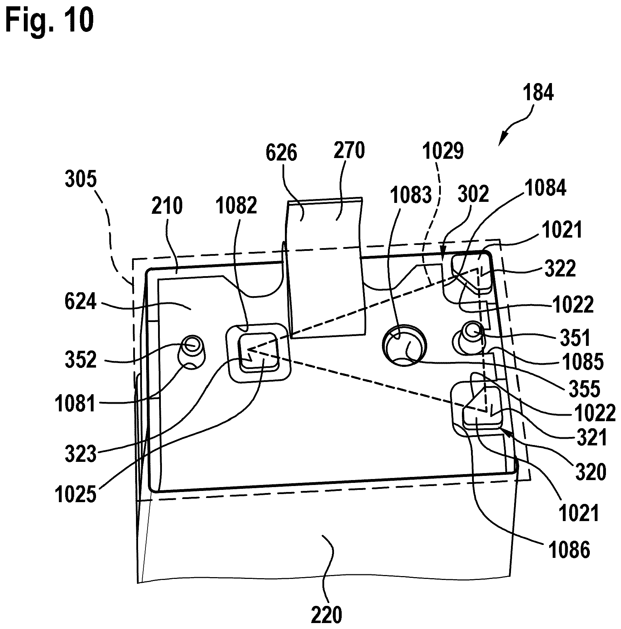

Fig. 10 zeigt den Neigungssensor 184 von Fig. 1 bis Fig. 8 und verdeutlicht die Seitenfläche 302 mit der planen Auflagefläche 320. Gemäß Fig. 10 sind die vorzugsweise drei Teilflächen 321, 322, 323 in einem Dreieck 1029 angeordnet. Bevorzugt weist die illustrativ linke Teilfläche 323 eine rechteckige Grundfläche 1025 auf. Vorzugsweise weisen die Teilflächen 321, 322 ebenfalls eine rechteckige Grundfläche 1021 auf. Gemäß einer Ausführungsform weisen die Grundflächen 1021 der Teilflächen 321, 322 jeweils eine Abflachung 1022 auf. Die Abflachung 1022 ist dabei bevorzugt einem Schwerpunkt des Dreiecks 1029 zugewandt angeordnet.

Des Weiteren verdeutlicht Fig. 10 den zweiten Leiterplattenabschnitt 624 der flexiblen Leiterplatte 270. Der zweite Leiterplattenabschnitt 624 weist bevorzugt eine der Ausnehmung 355 zugeordnete Ausnehmung 1083 auf. Somit kann zwischen der Ausnehmung 355 des Neigungssensor-Modulgehäuses 210 und der Ausnehmung 944 der Grundplatte 720 eine Schraubverbindung zur Fixierung des Neigungssensors 184 an der Grundplatte 720 ausgebildet werden. Vorzugsweise weist der zweite Leiterplattenabschnitt 624 den Teilflächen 321, 322, 323 zugeordnete Ausnehmungen 1082, 1084, 1086 auf, wobei die Ausnehmung 1082 der Teilfläche 323 zugeordnet ist, die Ausnehmung 1084 der Teilfläche 322 und die Ausnehmung 1086 der Teilfläche 321. Darüber hinaus weist der zweite Leiterplattenabschnitt 624 illustrativ den Zentrierstiften 351, 352 des Neigungssensor-Modulgehäuses 210, insbesondere der planen Auflagefläche 320 der Seitenfläche 302, zugeordnete Ausnehmungen 1081, 1085 auf. Die Ausnehmung 1081 ist vorzugsweise dem Zentrierstift 352 zugeordnet und die Ausnehmung 1085 dem Zentrierstift 351.

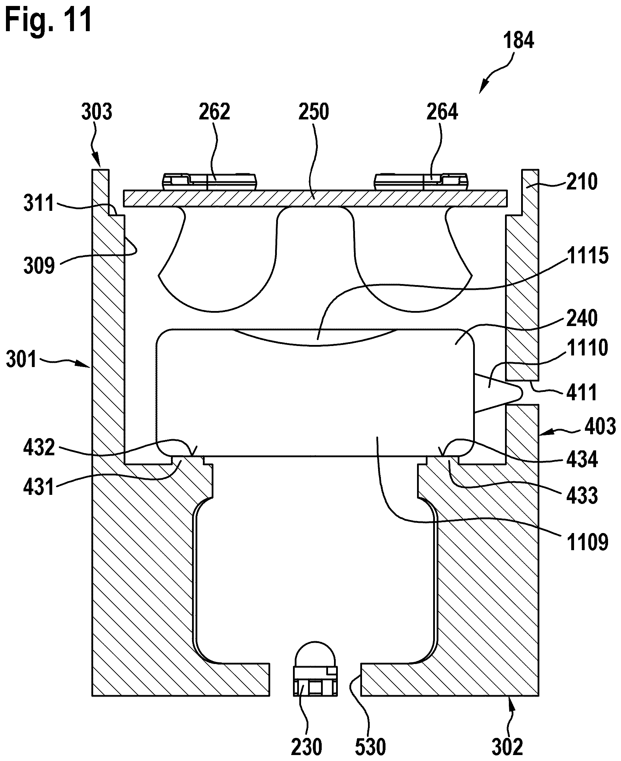

Fig. 11 zeigt den Neigungssensor 184 von Fig. 2 bis Fig. 6 mit dem in der Innenaufnahme 309 des Neigungssensor-Modulgehäuses 210 angeordneten Infrarot-Emitter 230, der Röhrenlibelle 240, dem Lichtleiter 250 und den vorzugsweise zwei Fotodioden 262, 264. Die Röhrenlibelle 240 weist vorzugsweise einen zylindrischen Grundkörper 1109 mit einer bevorzugt kegelförmigen Spitze 1110 auf. Die kegelförmige Spitze 1110 ist vorzugsweise abschnittsweise in der Ausnehmung 411 der illustrativ rechten Seitenfläche 403 des Neigungssensor-Modulgehäuses 210 angeordnet. Darüber hinaus ist im Grundkörper 1109 der Röhrenlibelle 240 illustrativ eine Luftblase 1115 angeordnet. Die Luftblase 1115 bewegt sich je nach einer vorhandenen Neigung der Röhrenlibelle 240.

Fig. 12 zeigt den dem Neigungssensor von Fig. 2 bis Fig. 6 und Fig. 11 zugeordneten Infrarot-Emitter 230, die Röhrenlibelle 240, den Lichtleiter 250 und die bevorzugt zwei Fotodioden 262, 264. Der Lichtleiter 250 weist einen illustrativ rechteckigen Grundkörper 1211 auf. Vorzugsweise ist an der von der Röhrenlibelle 240 abgewandten Seite 1201 des Lichtleiters 250 mindestens eine Aufnahme 332, 334 zur Aufnahme von zumindest einer Fotodiode 262, 264 angeordnet. Illustrativ sind zwei Aufnahmen 332, 334 an der illustrativ oberen Seite 1201 des Grundkörpers 1211 des Lichtleiters 250 ausgebildet. Des Weiteren weist der Lichtleiter 250 an seiner der Röhrenlibelle 240 zugewandten Seite 1202 bevorzugt zwei den Fotodioden 262, 264 zugeordnete Erweiterungen 1212, 1213 auf. Illustrativ ist die Erweiterung 1212 der in der Aufnahme 332 anordenbaren Fotodiode 262 zugeordnet und die Erweiterung 1213 ist der in der Aufnahme 334 anordenbaren Fotodiode 264 zugeordnet.

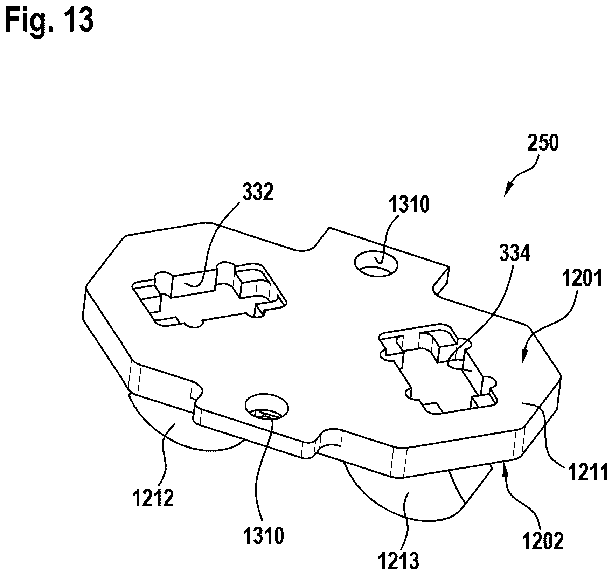

Fig. 13 zeigt den Lichtleiter 250 von Fig. 12 und verdeutlicht den Grundkörper 1211 des Lichtleiters 250 mit den zwei Aufnahmen 332, 334. Des Weiteren weist der Grundkörper 1211 vorzugsweise zumindest eine, illustrativ zwei Ausnehmungen 1310 zur Fixierung am Neigungssensor-Modulgehäuse 210 mittels der Schraube 440 von Fig. 4 oder zur Einbringung von Klebemittel zur Fixierung mittels einer Klebeverbindung auf.

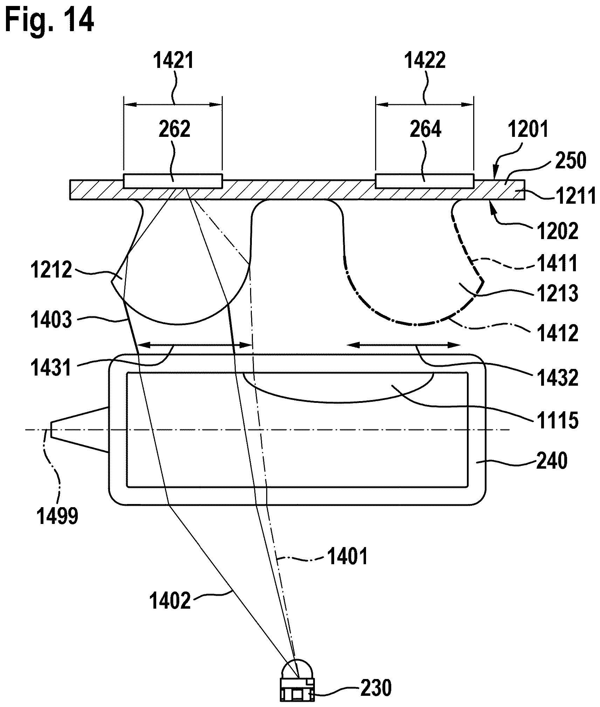

Fig. 14 zeigt den dem Neigungssensor von Fig. 2 bis Fig. 6 und Fig. 11 und Fig. 12 zugeordneten Infrarot-Emitter 230, die Röhrenlibelle 240 sowie den Lichtleiter 250 mit den vorzugsweise zwei Fotodioden 262, 264. Vorzugsweise ist die Röhrenlibelle 240 in Abwesenheit von der zugeordneten Luftblase 1115 in einem zugeordneten Messbereich, aufgrund einer vergleichbar großen Neigung des Neigungssensor-Modulgehäuses 210, entlang einer Richtung, die im Wesentlichen senkrecht zu einer der Rotationslibelle 240 zugeordneten Libellenachse 1499 ist, als Sammellinse ausgebildet. Die Libellenachse 1499 ist vorzugsweise eine Symmetrieachse der Röhrenlibelle 240. Ein Pfad 1401 stellt illustrativ eine Grenze dar, bis zu der die Lage der Luftblase 1115 einen Einfluss auf einen der Fotodiode 262 zugeordneten Fotostrom hat. Befindet sich die Luftblase 1115 illustrativ weiter rechts, ist die Fotodiode 262 gesättigt.

Bevorzugt ist die Röhrenlibelle 240 dazu ausgebildet, einen durch den Infrarot-Emitter 230 erzeugten Lichtstrahl 1402 zu transmittieren. Der Lichtleiter 250 ist vorzugsweise dazu ausgebildet, den transmittierten Lichtstrahl 1403 zu fokussieren und an die Fotodioden 262, 264 weiterzuleiten. Hierbei ist der Lichtleiter 250 bevorzugt dazu ausgebildet, mindestens einen bei einer Auslenkung der zugeordneten Luftblase 1115 innerhalb eines der Röhrenlibelle 240 zugeordneten Messbereichs erzeugten, in Abhängigkeit von dieser Auslenkung nicht, teilweise oder ganz verschatteten Libellenabschnitt 1431, 1432 auf einem fotosensitiven Bereich 1421, 1422 der mindestens einen Fotodiode 262, 264 abzubilden. Dabei wird vorzugsweise eine monotone Abhängigkeit des jeweiligen Fotostroms der Fotodioden 262, 264 von der Lage der Luftblase 1115 ohne Sättigung in diesem Bereich erzielt.

Des Weiteren streut die Röhrenlibelle 240 in Anwesenheit von der zugeordneten Luftblase 1115 vorzugsweise den von dem Infrarot-Emitter 230 erzeugten Lichtstrahl 1402. Bevorzugt weisen die Erweiterungen 1212, 1213 des Lichtleiters 250 jeweils einen konvexen Abschnitt 1412 und eine Abflachung 1411 auf. Die konvexen Abschnitte 1412 sind vorzugsweise der Röhrenlibelle 240 zugewandt angeordnet und die Abflachungen 1411 bilden jeweils eine nach außen weggerichtete Seite aus. Vorzugsweise bilden die konvexen Abschnitte 1412 zylindrische, fokussierende Grenzflächen der Erweiterungen 1212, 1213 aus. Die Abflachungen 1411 bilden bevorzugt total intern reflektierende Grenzflächen der Erweiterungen 1212, 1213 aus. Die reflektierenden Grenzflächen ermöglichen eine kompakte Bauform bei punktförmiger Beleuchtung durch den Infrarot-Emitter 230.

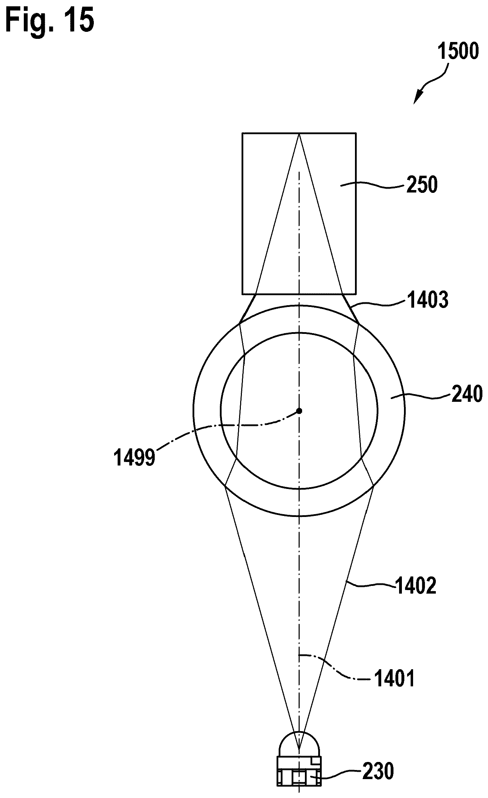

Fig. 15 zeigt den Infrarot-Emitter 230, die Röhrenlibelle 240 sowie den Lichtleiter 250 und verdeutlicht eine Situation 1500, in der die Luftblase 1115 von Fig. 11, Fig. 12 und Fig. 14 abwesend ist, bzw. außerhalb eines zugeordneten Messbereichs angeordnet ist. Hierbei ist die Röhrenlibelle 240 illustrativ entlang dem Pfad 1401 im Wesentlichen senkrecht zu der der Rotationslibelle 240 zugeordneten Libellenachse 1499 als Sammellinse ausgebildet. Vorzugsweise ist die Rotationslibelle 240 als zylindrische Sammellinse ausgebildet. Des Weiteren ist der Lichtleiter 250 dabei vorzugsweise als Prisma ausgebildet, das eine optische Distanz zwischen dem Infrarot-Emitter 230 und den Fotodioden 262, 264 in Fig. 11, Fig. 12 und Fig. 14 verlängert. Die Abstände werden bevorzugt so gewählt, dass die Bildebene des Infrarot-Emitters 230 in die fotosensitiven Bereiche 1421, 1422 der Fotodioden 262, 264 in Fig. 11, Fig. 12 und Fig. 14 fällt.

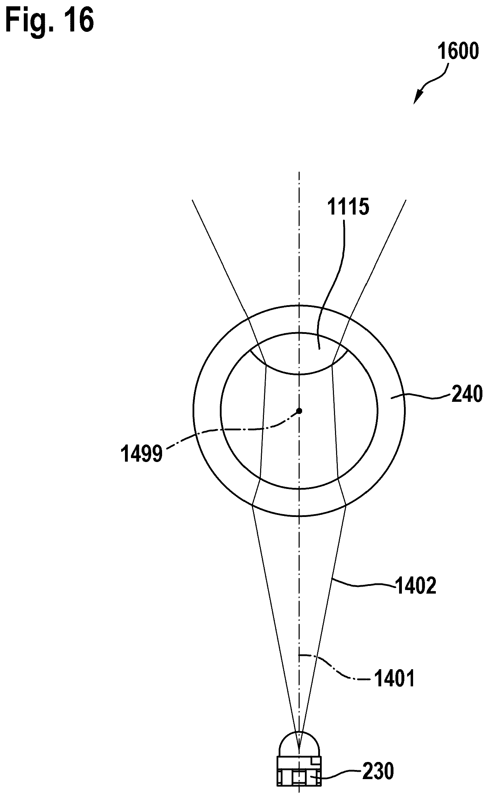

Fig. 16 zeigt den Infrarot-Emitter 230 und die Röhrenlibelle 240 und verdeutlicht eine Situation 1600, in der die Luftblase 1115 von Fig. 11, Fig. 12 und Fig. 14 anwesend ist, bzw. innerhalb eines zugeordneten Messbereichs aufgrund einer vergleichbaren kleinen Neigung des Neigungssensor-Modulgehäuses 210 angeordnet ist. In Anwesenheit der Luftblase 1115 wird der vom Infrarot-Emitter 230 erzeugte Lichtstrahl 1402 bevorzugt zerstreut, was zur Verschattung der Fotodiode 262, 264 in Fig. 11, Fig. 12 und Fig. 14 führt.

Fig. 17 zeigt den Neigungssensor 184 von Fig. 1 bis Fig. 8, Fig. 10 und Fig. 11. Bei einem Verfahren zur Herstellung des Neigungssensors 184 wird zuerst die Röhrenlibelle 240 innerhalb des Neigungssensor-Modulgehäuses 210, bzw. in der Innenaufnahme 309, angeordnet. Bevorzugt wird die Röhrenlibelle 240 auf dem Lagerungselement 433, 431 in Fig. 4, bzw. auf den zugeordneten planen Auflageflächen 432, 434 in Fig. 4 angeordnet. Anschließend erfolgt ein Vorspannen der Röhrenlibelle 240 mittels des federnden Elements 399. Hierbei wird das federnde Element 399 durch die Ausnehmung 570 in Fig. 5 in die Innenaufnahme 309 des Neigungssensor-Modulgehäuses 210 eingeführt und in der gegenüberliegenden Ausnehmung 650 der illustrativ linken Seitenfläche 202 verspannt. Dabei liegt das federnde Element 399 bevorzugt abschnittsweise am Außenumfang 398 der Röhrenlibelle an. Gemäß einer Ausführungsform wird nach dem Vorfixieren der Röhrenlibelle 240 das Neigungssensor-Modulgehäuse 210 verschlossen. Vorzugsweise wird dabei der Lichtleiter 250 im Neigungssensor-Modulgehäuse 210 angeordnet. Alternativ oder optional wird die Infrarot-Abschirmung 220 und/oder die Leiterplatte 270 am Neigungssensor-Modulgehäuse 210 angeordnet.

Nachfolgend erfolgt ein Ausgleichen eines Messfehlers durch ein Verschieben der Röhrenlibelle 240 entlang ihrer Längserstreckung 401 in Fig. 4 durch die seitliche Ausnehmung 411, 412 in Fig. 4 am Neigungssensor-Modulgehäuse 210. Der Messfehler, d.h. die nicht korrekte Anordnung der Röhrenlibelle 240 zum Lichtleiter 250, bzw. den Fotodioden 262, 264 in Fig. 2, Fig. 5, Fig. 6, Fig. 11, Fig. 12 und Fig. 14, wird vorzugsweise mittels einer Umschlagsmessung ermittelt. Anschließend erfolgt ein Einbringen von Klebemittel 1810 durch die im Neigungssensor-Modulgehäuse 210 an der ersten Seitenfläche 202 angeordnete Ausnehmung 610 zur Fixierung der Röhrenlibelle 240. Das Klebemittel 1810 wird dabei in der Innenaufnahme 309 des Neigungssensor-Modulgehäuses 210 zwischen der Seitenfläche 202 und der Röhrenlibelle 240 angeordnet. Abschließend wird das Klebemittel 1810 mittels UV-Licht ausgehärtet.

Das Aushärten des Klebemittels 1810 erfolgt vorzugsweise durch den auf der Oberseite 303 des Neigungssensor-Modulgehäuses 210 angeordneten Lichtleiter 250 über eine UV-Lampe. Alternativ erfolgt das Aushärten des Klebemittels 1810 über die an der illustrativ rechten Seitenfläche 201 angeordnete seitliche Ausnehmung bzw. den UV-Licht-Einbringbereich 520 in Fig. 5 über eine UV-Lampe.

Abschließend wird das federnde Element 399 vorzugsweise aus dem Neigungssensor-Modulgehäuse 210 herausgezogen. Das federnde Element 399 dient bevorzugt lediglich zum Vorspannen der Röhrenlibelle 240 und verbleibt nicht im Neigungssensor-Modulgehäuse 210.

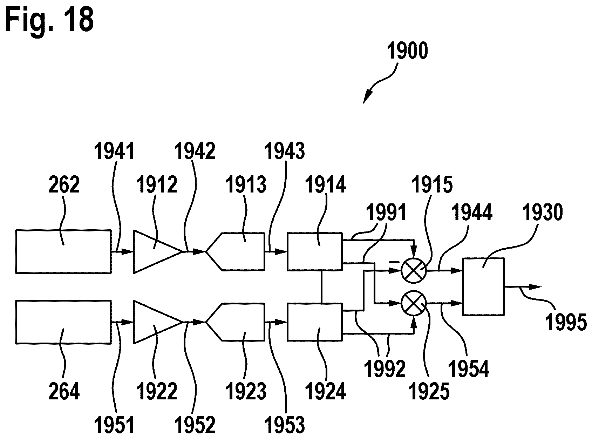

Fig. 18 zeigt eine Steuervorrichtung 1900, die dazu ausgebildet ist, eine Neigung 1995 der Lasereinheit 130 von Fig. 1 mittels des Neigungssensors 184 von Fig.1 bis Fig. 8, Fig. 10, Fig. 11 und Fig. 17 zu ermitteln. Bevorzugt ist die mindestens eine Fotodiode 262, 264 dazu ausgebildet, in Abhängigkeit von der jeweiligen Neigung 1995 einen Fotostrom 1941, 1951 zu erzeugen. Vorzugsweise ist die Steuervorrichtung 1900 dazu ausgebildet, die Neigung 1995 der Lasereinheit 130 mittels separater Messung des Fotostroms 1941, 1951 zu ermitteln. Hierbei weist der Neigungssensor 184 vorzugsweise zwei Fotodioden 262, 264 auf, die jeweils einen der Neigung 1995 zugeordneten Fotostrom 1941, 1951 erzeugen.

Die Steuervorrichtung 1900 weist bevorzugt einen der mindestens einen Fotodiode 262, 264 zugeordneten Transimpedanzwandler 1912, 1922 auf. Der mindestens eine Transimpedanzwandler 1912, 1922 ist vorzugsweise dazu ausgebildet, einen durch die mindestens eine Fotodiode 262, 264 ermittelten Fotostrom 1941, 1951 in eine proportionale Spannung 1942, 1952 umzuwandeln. Des Weiteren weist die Steuervorrichtung 1900 bevorzugt mindestens einen der mindestens einen Fotodiode 262, 264 zugeordneten Analog-Digital-Wandler 1913, 1923 auf. Der mindestens eine Analog-Digital-Wandler 1913, 1923 ist vorzugsweise dazu ausgebildet, den jeweils durch den mindestens einen Transimpedanzwandler 1912, 1922 in eine proportionale Spannung 1942, 1952 umgewandelten Fotostrom 1941, 1951, die ein analoges Format aufweist, in ein digitales Format bzw. in eine digitale Spannung 1943, 1953 umzuwandeln. Darüber hinaus weist die Steuervorrichtung 1900 bevorzugt mindestens einen der mindestens einen Fotodiode 262, 264 zugeordneten Tiefpassfilter 1914, 1924 auf. Der mindestens eine Tiefpassfilter 1914, 1924 ist vorzugsweise dazu ausgebildet, ein Rauschen der digitalisierten Spannung 1943, 1953 zu unterdrücken bzw. herauszufiltern und diese somit in eine gefilterte Spannung 1991, 1992 umzuwandeln. Abschließend ermittelt die Steuervorrichtung 1900 bevorzugt die Neigung 1995 als Quotient von einer Signaldifferenz 1944 und einer Signalsumme 1954 der gefilterten Spannungen 1991, 1992. Die Signaldifferenz 1944 wird vorzugsweise an einem Schaltelement 1915 erzeugt und die Signalsumme 1954 an einem Schaltelement 1925. Die Neigung 1995 bzw. der Quotient von der Signaldifferenz 1944 und der Signalsumme 1954 wird bevorzugt in einem Schaltelement 1930 ermittelt.

Bevorzugt sind zwei Fotodioden 262, 264 vorgesehen, wobei die Fotodiode 262 illustrativ den Fotostrom 1941 erzeugt, der durch den Transimpedanzwandler 1912 in eine proportionale Spannung 1942 umgewandelt wird, welche anschließend durch den Analog-Digital-Wandler 1913 in eine digitalisierte Spannung 1943 umgewandelt wird, welche mittels des Tiefpassfilters 1914 in die gefilterte Spannung 1991 umgewandelt wird. Des Weiteren erzeugt die Fotodiode 264 illustrativ den Fotostrom 1951, der durch den Transimpedanzwandler 1922 in eine proportionale Spannung 1952 umgewandelt wird, welche anschließend durch den Analog-Digital-Wandler 1923 in eine digitalisierte Spannung 1953 umgewandelt wird, welche mittels des Tiefpassfilters 1924 in die gefilterte Spannung 1992 umgewandelt wird.

Die Steuervorrichtung 1900 ist vorzugsweise dem Neigungssensor 184 zugeordnet. Gemäß einer Ausführungsform ist die Steuervorrichtung 1900 auf der Leiterplatte 270 des Neigungssensors 184 angeordnet. Alternativ kann die Steuervorrichtung 1900 der Elektronikeinheit 190 des Rotationslasers 100 von Fig. 1 zugeordnet sein.

Bei einem Verfahren zur Steuerung des Rotationslaser 100 mittels der Steuervorrichtung 1900 erfolgt vorzugsweise zuerst ein Messen des durch den Infrarot-Emitter 230 erzeugten Infrarot-Lichts durch die mindestens eine Fotodiode 262, 264. Anschließend wird der durch die mindestens eine Fotodiode 262, 264 erzeugte Fotostrom 1941, 1951 bevorzugt in die proportionale Spannung 1942, 1952 umgewandelt. Mittels des mindestens einen Analog-Digital-Wandler 1913, 1923 wird die proportionale Spannung 1942, 1952 vorzugsweise in die digitalisierte Spannung 1943, 1953 umgewandelt. Anschließend wird die digitalisierte Spannung 1943, 1953 bevorzugt mittels des mindestens einen Tiefpassfilters 1914, 1924 in die gefilterte Spannung 1991, 1992 gefiltert. Abschließend wird bevorzugt die Neigung 1995 durch Teilen der Signaldifferenz 1944 der gefilterten Spannung 1991, 1992 und der Signalsumme 1954 der gefilterten Spannung 1991, 1992 ermittelt.

Die Neigung 1995 wird vorzugsweise unabhängig von einer Intensität des Infrarot-Emitters 230 ermittelt. Alternativ oder optional wird die Neigung 1995 unabhängig von einer Intensität der mindestens einen Fotodiode 262, 264 ermittelt.

Vorteil des Verfahrens ist, dass ein größerer linearer Messbereich der Röhrenlibelle 240 eine nachträgliche Software-Kalibrierung eines zugeordneten Arbeitspunktes anhand der tatsächlichen Ausrichtung der Röhrenlibelle 240 relativ zur Achse des Infrarot-Emitters 230 ermöglicht. Damit können die Anforderungen an eine präzise mechanische Ausrichtung und Kalibrierung der Röhrenlibelle 240 und der Achse des Infrarot-Emitters 230 als Komponenten des Rotationslasers 100 verbessert werden.

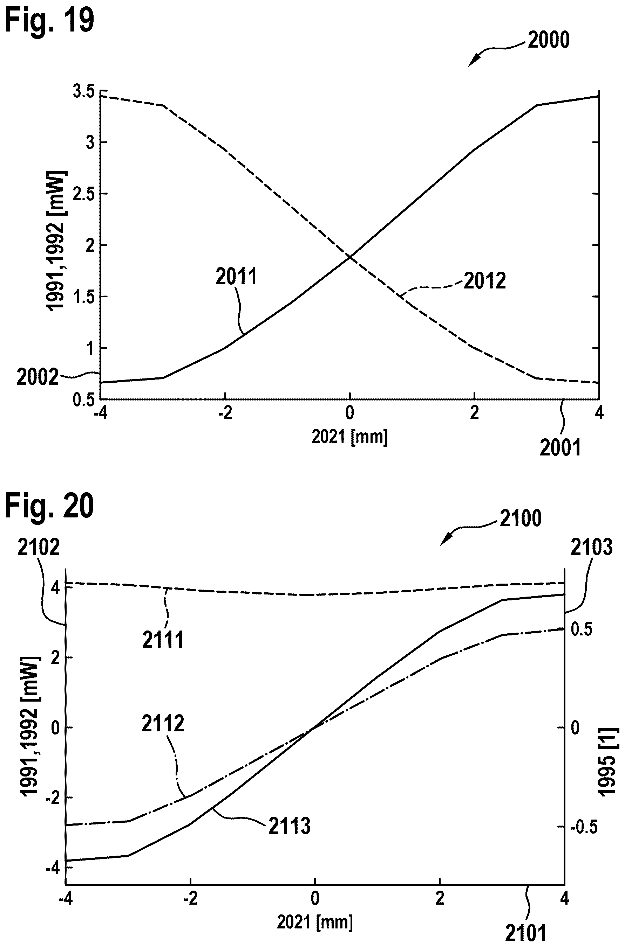

Fig. 19 zeigt ein Diagramm 2000 mit einer Abszissenachse 2001, die eine Blasenposition 2021 der Luftblase 1115 der Röhrenlibelle 240 in mm wiedergibt, und mit einer Ordinatenachse 2002, die die durch die Steuervorrichtung 1900 von Fig. 18 ermittelte gefilterte Spannung 1991, 1992 in mW wiedergibt. Eine Kurve 2011 visualisiert dabei die gefilterte Spannung 1991 der Fotodiode 262 und eine Kurve 2012 visualisiert die gefilterte Spannung 1992 der Fotodiode 264. Die individuellen Fotoströme bzw. die gefilterten Spannungen 1991, 1992 verhalten sich in Abhängigkeit von der Blasenposition 2021 bzw. der Neigung 1995 des Neigungssensors 184 gegenläufig.

Fig. 20 zeigt ein Diagramm 2100 mit einer Abszissenachse 2101, die eine Blasenposition 2021 der Luftblase 1115 der Röhrenlibelle 240 in mm wiedergibt, und mit einer illustrativ linken Ordinatenachse 2102, die die durch die Steuervorrichtung 1900 von Fig. 18 ermittelte gefilterte Spannung 1991, 1992 in mW wiedergibt, sowie einer illustrativ rechten Ordinatenachse 2103, die die Neigung 1995 wiedergibt. Eine Kurve 2111 visualisiert dabei die Signalsumme 1954 der gefilterten Spannungen 1991, 1992 und eine Kurve 2112 visualisiert die Signaldifferenz 1944 der gefilterten Spannungen 1991, 1992. Eine Kurve 2113 visualisiert den Quotienten der Signalsumme 1954 und der Signaldifferenz 1944 bzw. die durch die Steuervorrichtung 1900 ermittelte Neigung 1995. Um den Arbeitspunkt, bei dem Blasenposition 2021 bei 0mm liegt, ist die Signalsumme 1954 approximativ konstant und die Signaldifferenz 1944 sowie die ermittelte Neigung 1995 sind approximativ proportional zur Neigung 1995.

## Patentansprüche

1. Rotationslaser (100) mit einem Gehäuse (110), in dem eine Lasereinheit (130) angeordnet ist, und mit einer Nivelliereinheit (180) mit mindestens einem Neigungssensor (184) zur Ermittlung einer Ausrichtung der Lasereinheit (130) gegenüber einer Referenzfläche, **dadurch gekennzeichnet, dass** der mindestens eine Neigungssensor (184) ein im Gehäuse (110) des Rotationslasers (100) angeordnetes Neigungssensor-Modulgehäuse (210) aufweist, welches an zumindest einer Seitenfläche (301, 302) mindestens eine plane Auflagefläche (320, 360) zur plangenauen Ausrichtung des Neigungssensor-Modulgehäuses (210) im Gehäuse (110) aufweist.

2. Rotationslaser nach Anspruch 1, **dadurch gekennzeichnet, dass** das Gehäuse (110) eine Grundplatte (720) mit mindestens einem planen Auflagebereich (760) aufweist, wobei der mindestens eine plane Auflagebereich (760) der mindestens einen planen Auflagefläche (320, 360) zugeordnet ist.

3. Rotationslaser nach Anspruch 1 oder 2, **dadurch gekennzeichnet, dass** die mindestens eine plane Auflagefläche (320, 360) in zumindest zwei voneinander beabstandete Teilflächen (321, 322, 323, 324, 325; 524) aufgeteilt ist.

4. Rotationslaser nach Anspruch 3, **dadurch gekennzeichnet, dass** die zumindest zwei voneinander beabstandeten Teilflächen (321, 322, 323, 324, 325; 524) in einer gemeinsamen Ebene (305, 306) angeordnet sind, wobei die Ebene (305, 306) parallel zur zugeordneten Seitenfläche (301, 302) des Neigungssensor-Modulgehäuses (210) angeordnet ist.

5. Rotationslaser nach Anspruch 3 oder 4, **dadurch gekennzeichnet, dass** die mindestens eine plane Auflagefläche (320, 360) drei Teilflächen (321, 322, 323, 324, 325; 524) aufweist, die in einem Dreieck (1029) angeordnet sind.

6. Rotationslaser nach Anspruch 2 und einem der Ansprüche 3 bis 5, **dadurch gekennzeichnet, dass** das Neigungssensor-Modulgehäuse (210) an einer ersten Seitenfläche (302) die mindestens eine Auflagefläche (320) aufweist, wobei das Neigungssensor-Modulgehäuse (210) mittels der mindestens einen Auflagefläche (320) an der ersten Seitenfläche (302) für eine erste Ausrichtung (703) auf der Grundplatte (720) anordenbar ist.

7. Rotationslaser nach Anspruch 6, **dadurch gekennzeichnet, dass** das Neigungssensor-Modulgehäuse (210) an einer zweiten Seitenfläche (301) die mindestens eine Auflagefläche (360) aufweist, wobei das Neigungssensor-Modulgehäuse (210) mittels der mindestens einen Auflagefläche (360) an der zweiten Seitenfläche (301) für eine zweite Ausrichtung (704) auf der Grundplatte (720) anordenbar ist.

8. Rotationslaser nach Anspruch 6 und 7, **dadurch gekennzeichnet, dass** die erste Seitenfläche (302) senkrecht zur zweiten Seitenfläche (301) angeordnet ist.

9. Rotationslaser nach Anspruch 2 und Anspruch 6 bis 8, **dadurch gekennzeichnet, dass** die Grundplatte (720) einen ersten Abschnitt (821) zur Anordnung des Neigungssensor-Modulgehäuses (210) in der ersten Ausrichtung (703) aufweist und einen zweiten senkrecht zum ersten Abschnitt (821) ausgerichteten, zweiten Abschnitt (822) zur Anordnung des Neigungssensor-Modulgehäuses (210) in der zweiten Ausrichtung (704).

10. Rotationslaser nach einem der vorhergehenden Ansprüche, **dadurch gekennzeichnet, dass** in einer Innenaufnahme (309) des Neigungssensor-Modulgehäuses (210) eine Röhrenlibelle (240) angeordnet ist, wobei die Röhrenlibelle (240) in der Innenaufnahme (309) des Neigungssensor-Modulgehäuses (210) durch eine Klebeverbindung fixiert ist.

11. Rotationslaser nach Anspruch 10, **dadurch gekennzeichnet, dass** ein Klebemittel (1810) zur Ausbildung der Klebeverbindung durch eine Ausnehmung (610) von außerhalb des Neigungssensor-Modulgehäuses (210) in die **In**nenaufnahme (309) einbringbar ist.

12. Rotationslaser nach Anspruch 11, **dadurch gekennzeichnet, dass** die Ausnehmung (610) an einer Seitenfläche (201) angeordnet ist, die senkrecht zur mindestens einen Auflagefläche (320, 360) angeordnet ist.

13. Verfahren zur Herstellung eines Neigungssensors (184) einer Nivelliereinheit (180) für einen Rotationslaser (100) nach einem der vorhergehenden Ansprüche, welches folgende Schritte aufweist:
• Anordnen der Röhrenlibelle (240) innerhalb des Neigungssensor-Modulgehäuses (210),
• Vorspannen der Röhrenlibelle (240) mittels eines federnden Elements (399),
• Ausgleichen eines Messfehlers durch ein Verschieben der Röhrenlibelle (240) entlang ihrer Längserstreckung (401) durch mindestens eine am Neigungssensor-Modulgehäuse (210) angeordnete seitliche Ausnehmung (411, 412),
• Einbringen von Klebemittel (1810) durch eine Ausnehmung (610) zur Fixierung der Röhrenlibelle (240), und
• Aushärten des Klebemittels (1810) mittels UV-Licht.

14. Verfahren nach Anspruch 13, **dadurch gekennzeichnet, dass** nach dem Vorfixieren der Röhrenlibelle (240) das Neigungssensor-Modulgehäuse (210) verschlossen wird.

15. Verfahren nach Anspruch 13 oder 14, **dadurch gekennzeichnet, dass** nach einem Einbringen des Klebemittels (1810) ein Aushärten des Klebemittels (1810) mittels UV-Licht erfolgt, wobei das UV-Licht durch einen seitlichen UV-Licht-Einbringbereich (520) an einer der dritten Seitenfläche (202) gegenüberliegenden, vierten Seitenfläche (201) des Neigungssensor-Modulgehäuses (210) oder durch einen auf einer Oberseite (303) des Neigungssensor-Modulgehäuses (210) angeordneten UV-Licht-Einbringbereich (312) in das Neigungssensor-Modulgehäuse (210) eingestrahlt wird.
